(19) Europäisches Patentamt

European Patent Office

Office européen des brevets

(11) Veröffentlichungsnummer: **0 532 551 B1**

(12) **EUROPÄISCHE PATENTSCHRIFT**

(45) Veröffentlichungstag der Patentschrift: **02.08.95**

(21) Anmeldenummer: **91909998.6**

(22) Anmeldetag: **24.05.91**

(86) Internationale Anmeldenummer:
**PCT/EP91/00966**

(87) Internationale Veröffentlichungsnummer:
**WO 91/18934 (12.12.91 91/28)**

(51) Int. Cl.⁶: **C08F 10/00**, C08F 4/654

(54) **VERFAHREN ZUR HERSTELLUNG EINES POLY-1-OLEFINS.**

(30) Priorität: **01.06.90 DE 4017661**

(43) Veröffentlichungstag der Anmeldung:
**24.03.93 Patentblatt 93/12**

(45) Bekanntmachung des Hinweises auf die
Patenterteilung:
**02.08.95 Patentblatt 95/31**

(84) Benannte Vertragsstaaten:
**AT BE CH DE DK ES FR GB GR IT LI LU NL SE**

(56) Entgegenhaltungen:
**EP-A- 0 095 138**
**EP-A- 0 223 011**
**DE-A- 3 323 729**
**FR-A- 2 016 081**

(73) Patentinhaber: **HOECHST AKTIENGESELL-
SCHAFT**

**D-65926 Frankfurt (DE)**

(72) Erfinder: **Böhm, Ludwig**
**Leonhardstrasse 36**
**D-6234 Hattersheim am Main (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung bezieht sich auf ein Verfahren zur Herstellung eines Poly-1-olefins unter Verwendung eines Katalysators auf Basis einer gelartigen Magnesiumalkoholat-Dispersion.

Aus Magnesiumalkoholaten $Mg(OR^1)(OR^2)$ oder "komplexen" Magnesiumalkoholaten lassen sich durch Umsetzung mit Verbindungen des Titans, Zirkons, Vanadiums oder Chroms Feststoffe herstellen, die zusammen mit metallorganischen Verbindungen der 1. bis 3. Hauptgruppe des Periodensystems hervorragende Katalysatoren für die Olefinpolymerisation ergeben.

Bekannt ist ein Verfahren zur Polymerisation von $\alpha$-Olefinen in Gegenwart eines Mischkatalysators, dessen Komponente A durch Umsetzung von Magnesiumalkoholaten mit vierwertigen, halogenhaltigen Titanverbindungen hergestellt wurde (vgl. US 3644318). Die Magnesiumalkoholate werden in der Form eingesetzt, wie sie im Handel erhältlich sind. Die in diesen Verfahren erhältlichen Polymeren besitzen eine enge Molmassenverteilung.

Weiterhin ist ein Verfahren zur Herstellung eines Zieglerkatalysators bekannt, bei welchem ein gelöstes Magnesiumalkoholat mit einer halogenhaltigen Ti- oder V-Verbindung und einem Übergangsmetallalkoholat umgesetzt wird (vgl. EP 319173). Die dabei entstehenden Katalysatorpartikel sind kugelförmig und besitzen eine mittlere Teilchengröße von 10 bis 70 $\mu$m.

Schließlich ist bekannt, als Übergangsmetallkomponente ein Produkt der Reaktion einer vierwertigen, halogenhaltigen Titanverbindung mit einem Magnesiumalkoholat, welches mindestens 40 Gew.-% Teilchen eines Durchmessers kleiner 63 $\mu$m enthält, zu verwenden (vgl. EP 223011). Ein Magnesiumalkoholat mit dieser Korngröße erhält man unter anderem durch Mahlen eines Handelsproduktes in einer Kugelmühle. Das Magnesiumalkoholat wird als Suspension in einem inerten Kohlenwasserstoff eingesetzt. Indessen befriedigen die bekannten Katalysatoren noch nicht.

Es wurde gefunden, daß man Katalysatoren mit hoher bis sehr hoher Aktivität und mit der Möglichkeit, die Teilchengrößenverteilung des Polymerisats zu steuern, erhält, wenn man das Magnesiumalkoholat als gelförmige Dispersion einsetzt.

Die Erfindung betrifft somit ein Verfahren zur Herstellung eines Poly-1-olefins durch Polymerisation eines 1-Olefins der Formel $R^4 CH = CH_2$, in der $R^4$ Wasserstoff oder einen Alkylrest mit 1 bis 10 Kohlenstoffatomen bedeutet, in Suspension, in Lösung oder in der Gasphase, bei einer Temperatur von 20 bis 200 °C und einem Druck von 0,5 bis 50 bar, in Gegenwart eines Katalysators, der aus dem Umsetzungsprodukt eines Magnesiumalkoholats mit einer Übergangsmetallverbindung (Komponente a) und einer metallorganischen Verbindung eines Metalls der Gruppe I, II oder III des Periodensystems (Komponente b) besteht, dadurch gekennzeichnet, daß man die Polymerisation in Gegenwart eines Katalysators durchführt, dessen Komponente a in der Weise hergestellt wurde, daß eine Übergangsmetallverbindung des Titans, des Zirkons, des Vanadium oder des Chroms mit einer gelartigen Dispersion des Magnesiumalkoholats in einem inerten, gesättigten Kohlenwasserstoff, dessen mittleren korndurchmesser bei $\leq$ 1 $\mu$m liegt, umgesetzt wurde.

Zur Herstellung der Komponente a wird ein im Handel erhältliches Magnesiumalkoholat verwendet.

Dieses Magnesiumalkoholat kann ein "einfaches" Magnesiumalkoholat der Formel $Mg(OR^1)(OR^2)$ sein, in der $R^1$ und $R^2$ gleich oder verschieden sind und einen Alkylrest mit 1 bis 6 Kohlenstoffatomen bedeuten. Beispiele sind $Mg(OC_2H_5)_2$, $Mg(OiC_3H_7)_2$, $Mg(OnC_4H_9)_2$, $Mg(OCH_3)(OC_2H_5)$, $Mg(OC_2H_5)(OnC_3H_7)$. Es kann auch ein "einfaches" Magnesiumalkoholat der Formel $Mg(OR)_nX_m$ verwendet werden, in der X = Halogen, $(SO_4)_{1/2}$, OH, $(CO_3)_{1/2}$, $(PO_4)_{1/3}$, Cl ist, R die oben genannte Bedeutung von $R^1$ oder $R^2$ hat und n + m = 2 ist.

Es kann jedoch auch ein "komplexes" Magnesiumalkoholat eingesetzt werden.
Als "komplexes" Magnesiumalkoholat wird ein Magnesiumalkoholat bezeichnet, das neben Magnesium mindestens ein Metall der 1. bis 4. Hauptgruppe des Periodensystems enthält. Beispiele für ein derartiges komplexes Magnesiumalkolat sind:
$[Mg(OiC_3H_7)_4]Li_2$; $[Al_2(OiC_3H_7)_8]Mg$; $[Si(OC_2H_5)_6]Mg$;
$[Mg(OC_2H_5)_3]Na$; $[Al_2(OiC_4H_9)_8]Mg$;
$[Al_2(O-secC_4H_9)_6(OC_2H_5)_2]Mg$.
Die Herstellung der komplexen Magnesiumalkoholate (Alkoxosalze) erfolgt nach bekannten Methoden. Für die Herstellung seien folgende Beispiele genannt:
1. Man läßt zwei Metallalkoholate in einem geeigneten Lösemittel aufeinander einwirken, zum Beispiel

$$2Al(OR)_3 + Mg(OR)_2 \rightarrow [Al_2(OR)_8]Mg$$

2. Auflösen von Magnesium in einer alkoholischen Lösung eines Metallalkoholats

$$2 LiOR + Mg + 2 ROH \rightarrow [Mg(OR)_4]Li_2 + H_2$$

3. Gleichzeitiges Auflösen zweier Metalle in Alkohol

$$8 ROH + Mg + 2 Al \rightarrow [Al_2(OR)_8]Mg + 4 H_2$$

Bevorzugt verwendet werden die einfachen Magnesiumalkoholate, insbesondere $Mg(OC_2H_5)_2$, $Mg(OnC_3H_7)_2$ und $Mg(OiC_3H_7)_2$. Das Magnesiumalkoholat wird in reiner Form eingesetzt.

Handelsübliches $Mg(OC_2H_5)_2$ hat im allgemeinen folgende Spezifikation:

| | |
|---|---|
| Mg-Gehalt | 21-22 Gew.-% |
| Summe $Mg(OH)_2$ $MgCO_3$ | $\leq$ 1 Gew.-% |
| $C_2H_5OH$-Gehalt | < 0,3 Gew.-% |

Der mittlere Korndurchmesser liegt bei 500 $\mu m$. 90 % der Partikel haben einen Korndurchmesser im Bereich von 200 bis 1200 $\mu m$.

Das Magnesiumalkoholat wird in einem inerten gesättigten Kohlenwasserstoff suspendiert. Die Suspension wird unter Schutzgas ($Ar, N_2$) in einem Reaktor mittels eines hochtourigen Dispergators (z.B ®Ultra-Turrax oder ®Dispax, IKA-Maschinenbau Janke & Kunkel GmbH) in eine gelartige Magnesiumalkoholat-Dispersion überführt.

Diese Dispersion unterscheidet sich von der Suspension in zwei wesentlichen Merkmalen. Sie ist wesentlich viskoser als die Suspension und gelförmig, und das dispergierte Magnesiumalkoholat sedimentiert im Gegenstaz zum suspendierten Magnesiumalkoholat sehr viel langsamer, und sehr viel weniger (einige Stunden, Volumen des überstehenden Kohlenwasserstoffs bei suspendiertem Magnesiumalkoholat ca. 80 Vol-%, bei dispergierten Magnesiumalkoholat ca. 10 Vol-% bei gleichen Gehalt (131 g/1 $dm^3$)).

Das dispergierte Magnesiumalkoholat kann man auch durch mechanische Zerkleinerung mit Glaskugeln (∅ 1 cm) in einem Rundkolben herstellen, wobei der Kolbeninhalt mit einem zweiflügeligen Rührer bewegt wird. Dieses Verfahren ist allerdings sehr zeitaufwendig.

Als inerter gesättigter Kohlenwasserstoff eignet sich ein aliphatischer oder cycloaliphatischer Kohlenwasserstoff wie Butan, Pentan, Hexan, Heptan, Isooctan, Cyclohexan, Methylcyclohexan, sowie ein aromatischer Kohlenwasserstoff wie Toluol, Xylol; auch hydrierte Dieselöl- oder Benzininfraktionen, die sorgfältig von Sauerstoff, Schwefelverbindungen und Feuchtigkeit befreit worden sind, sind brauchbar.

Die gelartige Dispersion wird dann in einer Stufe oder in mehreren Stufen mit einer Ti-Verbindung ($TiCl_4$, $Ti(OR)_4$ u.a.), Zr-Verbindung ($Zr(OR)_4$ u.a.), V-Verbindung ($VCl_4$, $VOCl_3$ u.a.) oder Cr-Verbindung ($CrO_2Cl_2$ u.a.) umgesetzt.

Dabei wird normalerweise das Magnesiumalkoholat mit der Übergangsmetallverbindung bei einer Temperatur von 50 bis 100 °C, vorzugsweise von 60 bis 90 °C, in Gegenwart eines inerten Kohlenwasserstoffs unter Rühren umgesetzt. Auf 1 mol Magnesiumalkoholat werden normalerweise 0,9 bis 5 mol Übergangsmetallverbindung eingesetzt, vorzugsweise 1,4 bis 3,5 mol Übergangsmetallverbindung auf 1 mol Magnesiumalkoholat.

Die Reaktionsdauer beträgt normalerweise 0,5 bis 8 Stunden, vorzugsweise 2 bis 6 Stunden.

Man erhält einen in Kohlenwasserstoff unlöslichen, magnesium- und übergangsmetallhaltigen Feststoff, der als Komponente a bezeichnet wird.

Die Herstellung des erfindungsgemäß zu verwendenden Polymerisationskatalysators erfolgt durch Zusammenbringen der Komponente a und einer metallorganischen Verbindung eines Metalls der Gruppe I, II oder III des Periodensystems (Komponente b).

Die Komponente a kann als Suspension direkt mit der Komponente b umgesetzt werden; sie kann jedoch auch zunächst als Feststoff isoliert, gelagert und zur späteren Weiterverwendung wieder suspendiert werden.

Vorzugsweise verwendet man als Komponente b aluminiumorganische Verbindungen. Als aluminiumorganische Verbindungen eignen sich chlorhaltige aluminiumorganische Verbindungen, die Dialkylaluminiummonochloride der Formel $R_2^3 AlCl$ oder Alkylaluminiumsesquichloride der Formel $R_3^3 Al_2Cl_2$, worin $R^3$ ein Alkylrest mit 1 bis 16 Kohlenstoffatomen ist. Als Beispiele seien genannt $(C_2H_5)_2 AlCl$, $(iC_4H_9)_2 AlCl$, $(C_2H_5)_3 Al_2Cl_3$. Es können auch Gemische dieser Verbindungen eingesetzt werden.

Besonders bevorzugt werden als aluminiumorganische Verbindungen chlorfreie Verbindungen eingesetzt. Hierfür eigenen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Andererseits eigenen sich als solche chlorfreie aluminiumorgansiche Verbindungen Aluminiumtrialkyle $AlR_3^3$ oder Aluminiumdialkylhydride der Formel $AlR_2^3H$, in denen $R^3$ ein Alkylrest mit 1 bis 16 Kohlenstoffatomen bedeutet. Beispiele sind $Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)(C_{12}H_{25})_2$, $Al(iC_4H_9)(C_{12}H_{25})_2$.

Es können auch Mischungen von metallorganischen Verbindungen von Metallen der I., II. oder III. Gruppe des Periodensystems, insbesondere Mischungen verschiedener aluminiumorganischer Verbindungen eingesetzt werden.

Beispielsweise seien folgende Mischungen genannt:

$Al(C_2H_5)_3$ und $Al(iC_4H_9)_3$, $Al(C_2H_5)_2Cl$ und $Al(C_8H_{17})_3$,

$Al(C_2H_5)_3$ und $Al(C_8H_{17})_3$, $Al(C_4H_9)_2H$ und $Al(C_8H_{17})_3$,

$Al(iC_4H_9)_3$ und $Al(C_8H_{17})_3$, $Al(C_2H_5)_3$ und $Al(C_{12}H_{25})_3$,

$Al(iC_4H_9)_3$ und $Al(C_{12}H_{25})_3$, $Al(C_2H_5)_3$ und $Al(C_{16}H_{33})_3$,

$Al(C_3H_7)_3$ und $Al(C_{18}H_{37})_2(iC_4H_9)$, $Al(C_2H_5)_3$ und

Auluminiumisoprenyl (Umsetzungsprodukt von Isopren mit

$Al(iC_4H_9)_3$ oder $Al(iC_4H_9)_2H$).

Das Mischen der Komponente a und der Komponente b kann vor der Polymerisation in einem Rührkessel bei einer Temperatur von -30 °C bis 150 °C, vorzugsweise -10 bis 120 °C erfolgen. Es ist auch möglich, die beiden Komponenten direkt im Polymerisationskessel bei einer Temperatur von 20 bis 200 °C zu vereinigen. Die Zugabe der Komponente b kann jedoch auch in zwei Schritten erfolgen, indem vor der Polymerisationsreaktion die Komponente a mit einem Teil der Komponente b einer einer Temperatur von -30 °C bis 150 °C voraktiviert wird und die weitere Zugabe der Komponente b in dem Polymerisationsreaktor bei einer Temperatur von 20 bis 200 °C erfolgt.

Der erfindungsgemäß zu verwendende Polymerisationskatalysator wird zur Polymerisation von 1-Olefinen der Formel $R^4-CH=CH_2$, in der $R^4$ ein Wasserstoffatom oder einen Alkylrest mit 1 bis 10 C-Atomen bedeutet, eingesetzt, beispielsweise Ethylen, Propylen, Buten-(1), Hexen-(1), 4-Methylpenten-(1), Octen-(1).

Vorzugsweise wird Ethylen allein oder als Gemisch von mindestens 50 Gew.-% Ethylen und maximal 50 Gew.-% eines anderen 1-Olefins der obigen Formel polymerisiert.

Insbesondere wird Ethylen allein oder ein Gemisch von mindestens 90 Gew.-% Ethylen und maximal 10 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur -von 20 bis 200 °C, vorzugsweise 50 bis 150 °C, durchgeführt. Der Druck beträgt 0,5 bis 50 bar. Bevorzugt ist die Polymerisation in dem technisch besonders interessanten Druckbereich von 5 bis 30 bar.

Dabei wird normalerweise die Komponente a in einer Konzentration, bezogen auf Übergangsmetall, von 0,0001 bis 1, vorzugsweise 0,001 bis 0,5 mmol Übergangsmetall pro $dm^3$ Dispergiermittel angewendet. Die metallorganische Verbindung wird normalerweise in einer Konzentration von 0,1 bis 5 mmol, vorzugsweise 0,5 bis 4 mmol pro $dm^3$ Dispergiermittel verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin können Benzin- bzw. hydrierte Dieselölfraktionen, die sorgfältig von Sauerstoff, Schwefelverbindungen und Feuchtigkeit befreit worden sind, benutzt werden.

Die Gasphasenpolymerisation kann direkt oder nach Vorpolymerisation des Katalysators in einem Suspensionsverfahren durchgeführt werden.

Die Molmasse des Polymerisats wird in bekannter Weise geregelt, vorzugsweise wird dazu Wasserstoff verwendet.

Das erfindungsgemäße Verfahren ergibt infolge der hohen Aktivität des verwendeten Katalysators Polymerisate mit sehr geringem Übergangsmetall- und Halogengehalt und daher äußerst guten Werten im Farbbeständigkeits- und Korrosionstest.

Ferner ermöglicht das erfindungsgemäße Verfahren, die Katalysatoren so herzustellen, daß damit die Korngrößenverteilung und in gewissem Umfang auch die Kornform des entstehenden Polymerpulvers eingestellt werden kann.

Man erhält im allgemeinen eine verbesserte Kornmorphologie, hohe mittlere Korndurchmesser ($d_{50}$-Werte), enge Korngrößenverteilung, keine Grob- und Feinanteile, und hohe Katalysatorproduktivitäten. Die Schüttdichten sind vergleichbar zum Stand der Technik.

Somit können beim Einsatz dieser gelförmigen Dispersionen der Magnesiumalkoholate die morphologischen Eigenschaften des Polymerpulvers beeinflußt werden, was für ein technisches Verfahren Vorteile bringt (Filtration des Polymerpulvers ist einfacher, die Restgehalte an Dispersionsmittel sind geringer, dadurch ist der Energieaufwand zum Trocknen geringer), der Transport des Polymerpulvers in der Anlage ist einfacher, die Rieselfähigkeit ist besser, der Feinanteil in den Zyklonen der Trockner ist geringer). Die hohe Katalysatorproduktivität ergibt geringere Katalysatorrestgehalte im Produkt.

Die nachfolgenden Beispiele sollen die Erfindung erläutern.

Bei den Beispielen wurde zur Kontaktherstellung und zur Polymerisation eine hydrierte Dieselölfraktion mit einem Siedebereich von 130 bis 170 °C verwendet.

Die Verhältnisse Mg:Ti:Cl zur Charakterisierung der Katalysatoren wurden nach üblichen, analytischen Verfahren bestimmt.

Der zur Berechnung der Katalysatorproduktivität KA (S. Tabellen) erforderliche Titangehalt pro Masse des Katalysators wurde folgendermaßen ermittelt:

Aus der Katalysator-Suspension wurde ein bestimmtes Volumen pipettiert. Der Katalysator wurde mit Schwefelsäure hydrolysiert und der Titangehalt nach bekannten Methoden bestimmt.

Ergebnis: Titangehalt (mmol) pro Volumeneinheit ($cm^3$).

Aus der Suspension entnahm man eine zweite Probe mit der Pipette, zog das Suspensionsmittel im Vakuum ab und wog den Feststoff.

Ergebnis: Feststoff (g) pro Volumeneinheit ($cm^3$).

Damit erhält man durch Quotientenbildung mmol Ti/g Katalysator.

**Beispiel 1**

1,2 mol $Mg(OC_2H_5)_2$ ($\triangleq$ 137 g) wurden in 1,0 $dm^3$ (l) Dieselöl suspendiert. Die Suspension wurde in einem zylindrischen Glasgefäß unter Schutzgas (Ar, $N_2$), um Feuchtigkeit und Luft ($O_2$) auszuschließen, mit einem hochtourigen Dispergator in eine Dispersion überführt (Dauer ca. 3 h). Die Dispersion hatte eine gelartige Konsistenz. Es war ohne Schwierigkeit der Unterschied zwischen Suspension und Dispersion zu erkennen.

**Vergleichsbeispiel A**

Herstellung der Katalysatorkomponente a unter Verwendung einer $Mg(OC_2H_5)_2$-Suspension.

In einem 2 $dm^2$ Rührgefäß mit Rückflußkühler, 2-flügeligen Blatt-Rührer und Schutzgasüberlagerung (Ar) wurden 57 g $Mg(OC_2H_5)_2$ in 0,5 $dm^3$ (l) Dieselöl (hydrierte Benzinfraktion mit Siedebereich 120-140 °C) suspendiert. Die Suspension wurde auf 85 °C gebracht. Die Rührerdrehzahl wurde bei 350 Upm (optimale Rührerdrehzahl bei Einsatz suspendierten Mg-alkoholats; setzt man die Rührerdrehzahl herunter, so entstehen inhomogene, unbrauchbare Katalysatoren) eingestellt. Während 4 h wurden 0,15 mol $TiCl_4$ in 350 $cm^3$ Dieselöl zudosiert.

Danach wurde die entstandene Suspension 1 h auf 110 °C erhitzt. Dann wurde ein Gemisch von 0,2 mol $Al(C_2H_5)Cl_2$ und 0,2 mol $Al(C_2H_5)Cl$ in 400 $cm^3$ Dieselöl während 2 h zudosiert. Anschließend wurde die Temperatur weitere 2 h bei 110 °C gehalten. Damit war die Herstellung der Katalysatorkomponente a abgeschlossen. Die Feststoff-Suspension ließ man auf Raumtemperatur abkühlen. Das molare Verhältnis betrug: Mg:Ti:Cl $\approx$ 1:0,3:2,4. Diese Katalysatorkomponente a erhielt die Operations-Nummer 2.1.

**Beispiel 2**

Nach dem Verfahren gemäß Vergleichsbeispiel A wurde ein Katalysator unter Verwendung der nach Beispiel 1 hergestellten gelartigen $Mg(OC_2H_5)_2$-Dispersion (hier liegt keine Korngrößen-Verteilung vor; der mittlere Korndurchmesser liegt bei $\leq$ 1 $\mu$m) hergestellt. Das molare Verhältnis betrug etwa: Mg:Ti:Cl $\approx$ 1:0,3:2,4. Diese Katalysatorkomponente erhielt die Operations-Nummer 2.2.

**Beispiel 3**

In einem 2 dm$^3$ Rührgefäß mit Rückflußkühler, Rührer und Schutzgasüberlagerung (Ar) wurden 57 g Mg(OC$_2$H$_5$)$_2$ in 0,5 dm$^3$ Dieselöl dispergiert. Die gelartige Dispersion wurde auf 85 °C gebracht. Die Rührerdrehzahl wurde auf 150 Upm eingestellt. Während 4 h wurden 0,15 Mol TiCl$_4$ in 350 cm$^3$ Dieselöl zudosiert.

Die nachfolgende Umsetzung der entstandenen Suspension mit Al(C$_2$H$_5$)Cl$_2$ und Al(C$_2$H$_5$)$_2$Cl wurde wie im Vergleichsbeispiel A beschrieben durchgeführt.

Das molare Verhältnis betrug etwa Mg:Ti:Cl ≈ 1:0,3:2,4. Diese Katalysatorkomponente erhielt die Operations-Nummer 2.3.

**Beispiel 4**

Die Herstellung erfolgte wie in Beispiel 3, jedoch wurde die Reaktion bei 85 °C bei einer Rührerdrehzahl von 75 Upm durchgeführt.

Das molare Verhältnis betrug Mg:Ti:Cl = 1:0,3:2. Diese Katalysatorkomponente a erhielt die Operations-Nummer 2.4.

Wenn man von einer Magnesiumethylat-Suspension wie im Vergleichsbeispiel A ausgeht und die Rührerdrehzahl verändert (vgl. Beispiele 2 bis 4), so erhält man unbrauchbare Katalysatoren, weil sich das suspendierte Magnesiumethylat nicht gleichmäßig umsetzt und damit keine homogene Katalysator-Suspension entsteht. Wenn man die Rührerdrehzahl steigert (> 350 Upm), so erhält man homogene Katalysatoren, die aber ein sehr feines Polymerpulver bilden und somit wiederum nicht optimal sind.

**Vergleichsbeispiel B**

Vergleichsbeispiel A wurde wiederholt unter Verwendung einer Mg(OC$_2$H$_5$)$_2$-Suspension aus feinteiligem Mg(OC$_2$H$_5$)$_2$ (d$_{50}$ ≈ 6 μm). Das molare Verhältnis Mg:Ti:Cl war etwa 1:0,3:2,4. Diese Katalysatorkomponente a erhielt die Operations-Nummer 2.5.

Die Suspension war milchig trübe, während die Mg(OC$_2$H$_5$)$_2$-Dispersion nur leicht trübe war (Tyndall-Phänomen).

**Beispiel 5**

Polymerisationsversuche mit den Katalysatoren Operations-Nummer 2.1 bis 2.4 und 2.5.

Die Polymerisationsversuche wurden in einem 200 dm$^3$ Reaktor diskontinuierlich durchgeführt. Dieser Reaktor war mit einem Impellerrührer und Stromstörer ausgestattet.

Die Temperatur im Reaktor wurde gemessen und automatisch konstant gehalten. Polymerisationstemperatur 85 ± 1 °C. Die Polymerisationsreaktion wurde in folgender Weise durchgeführt:

In den mit N$_2$ überlagerten Reaktor wurden 100 dm$^3$ Dieselöl eingefüllt und auf 85 °C aufgeheizt. Unter N$_2$ wurde dann der Cokatalysator (Al(C$_2$H$_5$)$_3$) zugegeben, so daß im Reaktor eine Cokatalysatorkonzentration von 0,14 mmol/dm$^3$ vorlag. Danach wurde die Katalysatorkomponente a zugegeben, wobei der Katalysatorgehalt ~ 1 mmol/dm$^3$ im Dieselöl betrug. Der Katalysatorgehalt wurde in g-Atom Titan angegeben. Der Titangehalt in der Feststoff-Suspension wurde kolorimetrisch bestimmt.

Der Reaktor wurde mehrmals bis 8 bar mit H$_2$ (Wasserstoff) beaufschlagt und wieder entspannt, um den Stickstoff vollständig aus dem Reaktor zu entfernen (der Vorgang wurde durch Messung der H$_2$-Konzentration im Gasraum des Reaktors kontrolliert, die schließlich 95 Vol-% anzeigte). Die Polymerisation wurde durch Öffnen des Ethyleneingangs gestartet. Über die gesamte Polymerisationszeit wurde Ethylen in einer Menge von 7,0 kg/h zugeführt. Im Gasraum des Reaktors wurde der Gehalt an Ethylen und Wasserstoff ständig gemessen und die Volumenanteile konstant gehalten, indem Wasserstoff entsprechend dosiert wurde (Vol-% H$_2$ = 50; Vol-% C$_2$H$_4$ = 45).

Die Polymerisation wurde beendet, wenn der Gessamtdruck 9,5 bar erreicht-hatte. Der Reaktorinhalt wurde auf ein Filter abgelassen. Das mit Dieselöl behaftete Polymere wurde mehrere Stunden im Stickstoffstrom getrocknet. Die Polymerisationsergebnisse sind in Tabelle 1 angegeben.

Die Korngrößen-Verteilung des Polymerpulvers, die in Tab. 2 angegeben ist (entsp. DIN 66144), zeigt den starken Anstieg des d$_{50}$-Wertes bei paralleler Verschiebung der Kurven. Das bedeutet, daß die Korngrößen-Verteilung gleich bleibt, nur der mittlere Korndurchmesser ist angestiegen. Deshalb nehmen die Feinanteile (< 100 μm) stark ab, was besonders vorteilhaft ist.

Es ist außerdem erkennbar, daß die Katalysatorproduktivität stark ansteigt bei gleichzeitigen Anstieg der Schmelzindex-Werte bei gleichem Wasserstoff-Gehalt im Gasraum des Reaktors.

Alle erhaltenen Produkte besaßen nach GPC-Messungen eine enge Molmassenverteilung. Die $M_w/M_n$-Werte lagen zwischen 5 und 6. Es handelte sich also um Spritzguß-Produkte.

**Vergleichsbeispiel C**

In einem 2 $dm^3$ Rührgefäß mit Rückflußkühler, 2-flügeligem Blatt-Rührer und Schutzgasüberlagerung (Ar) wurden 57 g $Mg(OC_2H_5)_2$ in 0,5 $dm^3$ (l) Dieselöl (hydrierte Benzinfraktion mit Siedebereich 120-140°C) suspendiert. Die Suspension wurde auf 85°C gebracht. Die Rührerdrehzahl wurde bei 350 Upm eingestellt. Während 4 h wurde 1,0 mol $TiCl_4$ (unverdünnt) zugetropft. Nach Zugabe des $TiCl_4$ ließ man den Ansatz 1 h bei den vorstehend angegebenen Bedingungen nachreagieren. Die gebildete Feststoff-Suspension wurde mehrmals mit frischem Dieselöl bei 60°C gewaschen, bis der Titangehalt im Suspensionsmittel weniger als 10 mmol betrug. Als das erreicht war, ließ man die Feststoff-Suspension auf Raumtemperatur abkühlen.

Das molare Verhältnis Mg:Ti:Cl betrug etwa: 1:0,085:2,1 Diese Katalysatorkomponente a erhielt die Operations-Nummer 3.1

**Beispiel 6**

Die Herstellung der Katalysatorkomponente a erfolgte entsprechend Vergleichsbeispiel C unter Verwendung einer gelartigen $Mg(OC_2H_5)_2$-Dispersion, jedoch mit dem Unterschied der Rührerdrehzahl von 75 Upm. Das molare Verhältnis Mg:Ti:Cl betrug etwa: 1:0,17:2,4 Diese Katalysatorkomponente a erhielt die Operations-Nummer 3.2

**Beispiel 7**

Polymerisationsversuche mit den Katalysatoren Op.Nr. 3.1, 3.2 wurden wie in Beispiel 5 beschrieben durchgeführt. Unterschiedlich waren die Katalysator- und Cokatalysator-Stoffmengen und die Zusammensetzung im Gasraum des Reaktors (Vol % $H_2$ = 36 Vol % $C_2H_4$ = 60). Die Ergebnisse sind in Tabelle 3 zusammengestellt. Die Daten der Siebanalyse sind in Tabelle 4 angegeben.

**Vergleichsbeispiel D**

In einem 2 $dm^3$ Rührgefäß mit Rückflußkühler, 2-flügeligem Blatt-Rührer und Schutzgasüberlagerung (Ar) wurden 57 g $Mg(OC_2H_5)_2$ in 0,5 $dm^3$ Dieselöl (hydrierte Benzinfraktion mit Siedebereich 140-170°C) suspendiert. Die Suspension wurde auf 120°C gebracht. Die Rührerdrehzahl wurde auf 350 Upm eingestellt. Während 5 h wurden 0,65 mol Ti/$Cl_4$ (unverdünntes $TiCl_4$) gleichmäßig zugegeben. Anschließend wurde der Ansatz 60 h bei 120°C gerührt. Danach wurde er auf 70°C abgekühlt und der Feststoff so lange mit frischem Dieselöl gewaschen, bis der Titangehalt im Dieselöl (gelöste Titanverbindung) < 5 mmol/$dm^3$ betrug. Bei dieser Verfahrensweise wurde bei 120°C Ethylchlorid abgespalten. Diese Katalysatorkomponente a erhielt die Operations-Nummer 4.1. Mg:Ti:Cl = 1:1,3:3,6.

**Vergleichsbeispiel E**

Vergleichsbeispiel D wurde wiederholt unter Verwendung einer feinteiligen $Mg(OC_2H_5)_3$-Suspension ($d_{50}$ ≈ 6 $\mu$m). Diese Katalysatorkomponente a erhielt die Operations-Nummer 4.2. Mg:Ti:Cl ≈ 1:1,3:3,6.

**Beispiel 8**

Herstellung der Katalysatorkomponente a

Vergleichsbeispiel D wurde wiederholt unter Verwendung einer $Mg(OC_2H_5)_2$-Dispersion. Die Katalysatorkomponente a erhielt die Operations-Nummer 4.3. Mg:Ti:Cl ≈ 1:1,3:4.

**Beispiel 9**

Polymerisationsversuche wurden mit den Katalysatorkomponenten a Operations-Nummer 4.1 - 4.3 durchgeführt. Unterschiedlich war der Cokatalysator. Hier wurde Isoprenylaluminium (Handelsprodukt) eingesetzt. Die Stoffmengen von Katalysatorkomponente a und Cokatalysator, sowie die Zusammensetzung im Gasraum des Reaktors (Vol % $H_2$ = 55 Vol % $C_2H_4$ = 40) mußten geändert werden. Die Ergebnisse sind in Tabelle 4 zusammengestellt. Alle erhaltenen Produkte besaßen nach GPC-Messungen eine breite Molmassenverteilung. Die $M_w/M_n$-Werte lagen zwischen 10 und 15. Es handelte sich also um Extrusionstypen.

Es ist erkennbar, daß sich die aus der gelartigen Dispersion hergestellte Katalysatorkomponente a in der mittleren Korngröße ($d_{50}$-Wert) und der Katalysatorproduktivität vorteilhaft von den Katalysatorkomponenten a unterscheidet, welche aus einer Suspension grob- oder feinteiligen Magnesiumethylats hergestellt wurden.

**Vergleichsbeispiel F**

In einem 2 $dm^3$ Rührgefäß mit Rückflußkühler, 2-flügeligem Blatt-Rührer und Schutzgas-Überlagerung (Ar) wurden 57 g $Mg(OC_2H_5)_2$ in 0,5 $dm^3$ Dieselöl bei einer Rührerdrehzahl von 350 Upm suspendiert. Die Suspension wurde auf 85°C gebracht. Während 5,5 h wurden 1,25 mol $TiCl_4$ zugetropft. Nach Beendigung der $TiCl_4$-Zugabe wurde der Ansatz 1 h bei 85°C gerührt. Bei 65°C wurde der Feststoff mit Dieselöl so lange gewaschen, bis der Ti-Gehalt im Dieselöl < 5 $mmol/dm^3$ betrug. Man gab so viel Dieselöl zu, bis der ursprüngliche Füllstand im Rührgefäß erreicht war. Dann gab man 60 mmol $Ti(OC_2H_5)_4$ hinzu, erhöhte die Temperatur unter Rühren über 20 h. Diese Katalysatorkomponente a erhielt die Operations-Nummer 5.1. Das Mg:Ti:Cl-Verhältnis betrug etwa 1:0,135:2,15.

**Vergleichsbeispiel G**

Vergleichsbeispiel F wurde wiederholt unter Verwendung einer feinteiligen $Mg(OC_2H_5)_2$-Suspension ($d_{50} \approx 6 \mu m$).

Die Katalysatorkomponente a erhielt die Operations-Nummer 5.2. Das Mg:Ti:Cl-Verhältnis betrug etwa 1:0,14:2,15.

**Beispiel 10**

Der Katalysator wurde entsprechend Vergleichsbeispiel F hergestellt unter Verwendung einer $Mg(OC_2H_5)_2$-Dispersion Die Rührerdrehzahl betrug 350 Upm. Die Katalysatorkomponente a erhielt die Operations-Nummer 5.3. Das Mg:Ti:Cl-Verhältnis betrug etwa 1:0,20:2,3.

**Beispiel 11**

Beispiel 10 wurde wiederholt unter Verwendung einer $Mg(OC_2H_5)_2$-Dispersion. Die Rührerdrehzahl betrug jedoch 75 Upm. Die Katalysatorkomponente a erhielt die Operations-Nummer 5.4. Das Mg:Ti:Cl-Verhältnis betrug etwa 1:0,28:2,4.

**Beispiel 12**

Polymerisationsversuche wurden mit den Katalysatorkomponenten a 5.1 bis 5.4 durchgeführt entsprechend Beispiel 5. Als Cokatalysator wurde Aluminiumtriisobutyl (Handelsprodukt) eingesetzt. Die Stoffmengen von Katalysatorkomponente a und Cokatalysator, sowie die Zusammensetzung im Gasraum des Reaktors (Vol % $H_2$ = 40; Vol % $C_2H_4$ = 55) mußten geändert werden. Die Ergebnisse sind in Tabelle 4 zusammengestellt. Nach GPC-Messungen bewirken diese Katalysatoren eine Molmassen-Verteilung mit $M_w/M_n$-Werten von 7-10.

**Beispiel 13**

Copolymerisationsversuche wurden mit der Katalysatorkomponente a 4.3 in einem 200 $dm^3$ Reaktor diskontinuierlich durchgeführt. Dieser Reaktor war mit einem Impellerrührer und Stromstörer ausgestattet. Die Temperatur wurde automatisch geregelt. Die Versuchstemperatur betrug 85°C ± 1°C. Die Polymerisation wurde entsprechend Beispiel 5 durchgeführt.

Vorlage: 100 $dm^3$ Dieselöl Cokatalysator:Isoprenylaluminium Cokatalysatorkonzentration 1,2 $mmol/dm^3$.
Vol % $H_2$ im Gasraum nach GC-Messung: 40 Vol %.
Ethylenzufuhr: 5 kg/h,

Reaktionszeit: 4 h.

Die Polymerisation wurde durch Öffnen der Ethylenzufuhr gestartet. 5 Minuten danach wurde das Comonomere zugegeben (s. Tabelle 5). Um den Comonomergehalt im Gasraum (GC-Messung) konstant zu halten, wurde Comonomeres kontinuierlich nachdosiert (s. Tabelle 5). Im Laufe der Zeit stieg der Druck im Reaktor an. Die Drücke nach 4 h sind in Tabelle 5 ebenfalls angegeben. Die Tabelle enthält weitere Angaben über Katalysatorproduktivität (KA) Schmelzindex (MFI) entsprechend DIN 53735 und Dichte (d) nach DIN 53479

**Tabelle 1** Polymerisationsversuche 200 dm$^3$ - Reaktor

85°C, 100 dm$^3$ Dieselöl, 7 kg/h Ethylen

Druck (maximal) 9,5 bar, 50 Vol % Wasserstoff im Gasraum

| Katalysator | $n_k$ [1] [mmol] | $n_{AlR_3}$ [2] [mmol] | KA [3] [kg/g] | MFI 190/5 [4] [g/10'] | SD [5] [g/cm$^3$] | $d_{50}$ [6] [µm] |
|---|---|---|---|---|---|---|
| Op.Nr. 2.1 | 1 | 14 | 22 [7] | 9,5 | 0,37 | 150 |
| Op.Nr. 2.5 | 1,1 | 14 | 18 [7] | 10,0 | 0,36 | 140 |
| Op.Nr. 2.2 | 0,9 | 14 | 50 [8] | 16 | 0,37 | 260 |
| Op.Nr. 2.3 | 0,9 | 14 | 55 [8] | 17 | 0,34 | 440 |
| Op.Nr. 2.4 | 0,9 | 14 | 50 [8] | 16 | 0,31 | 480 |

[1] Stoffmenge Katalysator in mmol Übergangsmetall (Ti)-Verbindung

[2] Stoffmenge Cokatalysator ($Al(C_2H_5)_3$)

[3] Katalysatorproduktivität (kg PE/g Katalysator)

[4] Schmelzindex nach DIN 53735

[5] Schüttdichte nach DIN 53468

[6] $d_{50}$-Wert aus log. Normalverteilung nach DIN 66144

[7] Ti-Gehalt des Katalysators: 1,47 mMol/g

[8] Ti-Gehalt des Katalysators: 1,73 mMol/g

EP 0 532 551 B1

**Tabelle 2**  Korngrößen-Verteilungs-Analyse der PE-Pulver

Einwaage: 100 g; Auswaage in g auf dem angegebenen Sieb

Komponente a

Op. Nr.

| Sieb | 2.1 | 2.5 | 2.2 | 2.3 | 2.4 |
|---|---|---|---|---|---|
| 1000 μm | - | - | - | 4,0 | 10,3 |
| 800 μm | - | - | - | 4,6 | 8,8 |
| 600 μm | - | - | 1,0 | 4,8 | 10,4 |
| 500 μm | - | - | 3,5 | 16,4 | 15,9 |
| 400 μm | - | - | 4,3 | 29,5 | 24,4 |
| 300 μm | 2,6 | 2,9 | 21,5 | 22,5 | 19,5 |
| 250 μm | 5,1 | 4,3 | 21,4 | 8,3 | 5,3 |
| 200 μm | 13,4 | 15,2 | 28,1 | 8,2 | 4,0 |
| 150 μm | 29,2 | 28,8 | 15,1 | 1,5 | 1,0 |
| 100 μm | 34,8 | 34,2 | 4,8 | 0,3 | 0,2 |
| 63 μm | 13,5 | 12,5 | - | - | - |
| < 63 μm | 1,5 | 2,0 | 0,2 | - | - |
| $d_{50}/μm$ | 150 | 140 | 260 | 440 | 480 |
| < 100 μm/Gew.-% | 15 | 14,5 | 0,2 | < 0,1 | < 0,1 |

**Tabelle 3**  Polymerisationsversuche 200 dm$^3$ - Reaktor

85°C, 100 dm$^3$  Dieselöl, 7 kg/h Ethylen

Druck (maximal) 9,5 bar, 36 Vol % Wasserstoff im Gasraum

| Katalysator | $n_k$ [1] [mmol] | $n_{AlR_3}$ [2] [mmol] | KA [3] [kg/g] | MFI 190/5 [4] [g/10'] | SD [5] [g/cm$^3$] | $d_{50}$ [6] [µm] |
|---|---|---|---|---|---|---|
| Op.Nr. 3.1 | 2 | 40 | 25 [7] | 6,0 | 0,38 | 160 |
| Op.Nr. 3.2 | 2 | 40 | 45 [8] | 6,0 | 0,38 | 290 |

Legenden s. Tabelle 1

[7]  Ti-Gehalt des Katalysators: 0,85 mmol/g

[8]  Ti-Gehalt des Katalysators: 1,7  mmol/g

Korngrößen-Verteilungen s. Tabelle 2

Nach GPC-Messungen handelt es sich um Produkte mit enger Molmassenverteilung

und $M_w/M_n$-Werten zwischen 4,5 und 5,5

EP 0 532 551 B1

EP 0 532 551 B1

Tabelle 4  Polymerisationsversuche 200 $dm^3$ - Reaktor

85°C, 100 $dm^3$  Dieselöl, 7 kg/h Ethylen

Druck (maximal) 9,5 bar, 55 Vol % Wasserstoff im Gasraum

| Katalysator | $n_k$ [1] [mmol] | $n_{AlR_3}$ [9] [mmol] | KA [3] [kg/g] | MFI 190/5 [4] [g/10'] | SD [5] [g/cm³] | $d_{50}$ [6] [µm] |
|---|---|---|---|---|---|---|
| Op.Nr. 4.1 | 9 | 100 | 10 | 2,8 | 0,37 | 190 |
| Op.Nr. 4.2 | 9 | 100 | 11 | 3,0 | 0,38 | 210 |
| Op.Nr. 4.3 | 9 | 100 | 25 | 4,0 | 0,35 | 350 |

Legenden s. Tabelle 1

Abweichend sind

[9]  Cokatalysator: Isoprenylaluminium

**Tabelle 5**  Polymerisationsversuche 200 dm$^3$ - Reaktor

85°C, 100 dm$^3$ Dieselöl, 7 kg/h Ethylen

Druck (maximal) 9,5 bar, 50 Vol % Wasserstoff im Gasraum

| Katalysator | $n_k$ [1] [mmol] | $n_{AlR_3}$ [10] [mmol] | KA [3] [kg/g] | MFI 190/5 [4] [g/10'] | SD [5] [g/cm$^3$] | $d_{50}$ [6] [µm] |
|---|---|---|---|---|---|---|
| Op.Nr. 5.1 | 1,5 | 25 | 30 | 3,0 | 0,34 | 150 |
| Op.Nr. 5.2 | 1,5 | 25 | 30 | 3,5 | 0,32 | 160 |
| Op.Nr. 5.3 | 1,0 | 20 | 50 | 4,0 | 0,30 | 280 |
| Op.Nr. 5.4 | 1,0 | 20 | 50 | 4,5 | 0,30 | 290 |

Legenden s. Tabelle 1

Abweichend sind

[10] Cokatalysator: Triisobutylaluminium

EP 0 532 551 B1

Tabelle 6  Polymerisationsversuche 200 dm$^3$ - Reaktor

85°C, 100 dm$^3$  Dieselöl, 5 kg/h Ethylen

40 Vol % Wasserstoff im Gasraum

Katalysator Op. Nr. 4.3

| Comonomeres | Volumen Comonomeres nach 5 Min./dm$^3$ | Volumen Comonomeres Nachdosierung/dm$^3$ | $n_K$ [mmol] | $n_{AIR_3}$ [mmol] | p [bar] | KA [kg/g] | MFI/190/5 [g/10'] | d [g/cm$^3$] | SD [g/cm$^3$] | $d_{50}$ [µm] |
|---|---|---|---|---|---|---|---|---|---|---|
| Propen | 0,5 | 2,9 | 0,15 | 120 | 4 | 35 | 1,4 | 0,935 | 0,37 | 390 |
| 1-Buten | 0,45 | 1,3 | 0,15 | 120 | 4 | 33 | 1,2 | 0,940 | 0,35 | 370 |
| 1-Hexen | 0,8 | 4,2 | 0,20 | 150 | 5 | 36 | 1,1 | 0,941 | 0,35 | 390 |
| 1-Octen | 1,1 | 8,9 | 0,25 | 300 | 6 | 32 | 1,2 | 0,941 | 0,34 | 380 |

**Patentansprüche**

1. Verfahren zur Herstellung eines Poly-1-olefins durch Polymerisation eines 1-Olefins der Formel R$^4$CH = CH$_2$, in der R$^4$ Wasserstoff oder einen Alkylrest mit 1 bis 10 Kohlenstoffatomen bedeutet, in Suspension, in Lösung oder in der Gasphase, bei einer Temperatur von 20 bis 200 °C und einem Druck von 0,5 bis 50 bar, in Gegenwart eines Katalysators, der aus dem Umsetzungsprodukt eines Magnesiumalkoholats mit einer Übergangsmetallverbindung (Komponente a) und einer metallorganischen Verbindung eines Metalls der Gruppe I, II oder III des Periodensystems (Komponente b) besteht, dadurch gekennzeichnet, daß man die Polymerisation in Gegenwart eines Katalysators durchführt, dessen Komponente a in der Weise hergestellt wurde, daß eine Übergangsmetallverbindung des Titans, des Zirkons, des Vanadins oder des Chroms mit einer gelartigen Dispersion des Magnesiumalkoholats in einem inerten gesättigten Kohlenwasserstoff, dessen mittlerer Korndurchmesser bei $\leqq 1$ $\mu$m liegt, umgesetzt wurde.

2. Verfahren nach Anspruch 1, dadurch gekennzeichnet, daß die Komponente a vor der Polymerisationsreaktion mit einem Teil der Komponente b bei einer Temperatur von - 30 °C bis 150 °C voraktiviert wird und die weitere Zugabe der Komponente b in dem Polymerisationsreaktor bei einer Temperatur von 20 bis 200 °C erfolgt.

3. Verfahren nach Anspruch 1, dadurch gekennzeichnet, daß ein einfaches Magnesiumalkoholat der Formel $Mg(OR^1)(OR^2)$ in der $R^1$ und $R^2$ gleich oder verschieden sind und einen Alkylrest mit 1 bis 6 C-Atomen bedeuten, eingesetzt wird.

4. Verfahren nach Anspruch 3, dadurch gekennzeichnet, daß das eingesetzte Magenisumalkoholat $Mg(OC_2H_5)_2$, $Mg(OnC_3H_7)_2$ oder $Mg(OiC_3H_7)_2$ ist.

## Claims

1. A process for the preparation of a poly-1-olefin by polymerising a 1-olefin of the formula $R^4CH=CH_2$, in which $R^4$ is hydrogen or an alkyl radical having 1 to 10 carbon atoms, in suspension, in solution or in the gas phase, at a temperature of 20 to 200°C and under a pressure of 0.5 to 50 bar, in the presence of a catalyst composed of the reaction product of a magnesium alcoholate with a transition metal compound (component a) and an organometallic compound of a metal of group I, II or III of the periodic table (component b), which comprises carrying out the polymerization in the presence of a catalyst whose component a was prepared by reacting a transition metal compound of titanium, zirconium, vanadium or chromium with a gel-like dispersion in an inert saturated hydrocarbon of the magnesium alcoholate whose mean particle diameter is $\leqq 1$ $\mu$m.

2. The process as claimed in claim 1, wherein, before the polymerization reaction component a is preactivated with a portion of component b at a temperature of from -30°C to 150°C and the further addition of component b takes place in the polymerization reactor at a temperature of from 20 to 200°C.

3. The process as claimed in claim 1, wherein a simple magnesium alcoholate of the formula $Mg(OR^1)$-$(OR^2)$ in which $R^1$ and $R^2$ are identical or different and are each an alkyl radical having 1 to 6 carbon atoms is employed.

4. The process as claimed in claim 3, wherein the magnesium alcoholate employed is $Mg(OC_2H_5)_2$, $Mg(OnC_3H_7)_2$ or $Mg(OiC_3H_7)_2$.

## Revendications

1. Procédé pour préparer une poly-1-oléfine par polymérisation d'une 1-oléfine de formule $R^4CH=CH_2$, dans laquelle $R^4$ représente l'hydrogène ou un radical alkyle ayant de 1 à 10 atomes de carbone, en suspension, en solution ou en phase gazeuse, à une température de 20 à 200 °C et sous une pression de 0,5 à 50 bars, en présence d'un catalyseur qui est constitué du produit de réaction d'un alcoolate de magnésium avec un composé de métal de transition (composant a) et d'un composé organométallique d'un métal du groupe I, II ou III du système périodique (composant b), caractérisé en ce que l'on effectue la polymérisation en présence d'un catalyseur dont le composant a est préparée de telle façon que l'on fait réagir un composé de métal de transition du titane, du zirconium, du vanadium ou du chrome avec une dispersion en forme de gel de l'alcoolate de magnésium dans un hydrocarbure inerte saturé, et dont le diamètre moyen des particules est $\leqq 1$ $\mu$m.

2. Procédé selon la revendication 1, caractérisé en ce que l'on préactive le composant a, avant la réaction de polymérisation, avec une partie du composant b à une température de -30 °C à 150 °C, et en ce que l'on effectue l'addition ultérieure de composant b dans le réacteur de polymérisation à une température de 20 à 200 °C.

3. Procédé selon la revendication 1, caractérisé en ce que l'on utilise un alcoolate simple de magnésium de formule $Mg(OR^1)(OR^2)$ dans laquelle $R^1$ et $R^2$ sont identiques ou différents et représentent un radical alkyle ayant de 1 à 6 atomes de C.

4. Procédé selon la revendication 3, caractérisé en ce que l'alcoolate de magnésium utilisé est Mg-$(OC_2H_5)_2$, $Mg(OnC_3H_7)_2$, ou $Mg(OiC_3H_7)_2$.